# FASCICULE DE BREVET EUROPEEN

(11) **EP 0 524 880 B1**
(45) Date de publication et mention de la délivrance du brevet: **02.01.1997**
(21) Numéro de dépôt: 92402122.3
(22) Date de dépôt: 23.07.1992
(51) Int. Cl.: F23C 11/04, F23D 14/32

(54) **Procédé et installation de combustion pulsée**
Verfahren und Anlage für pulsierende Verbrennung
Process and installation for pulsating combustion

(30) Priorité: 23.07.1991 FR 9109304
(43) Date de publication de la demande: 27.01.1993
(73) Titulaire: L'AIR LIQUIDE, SOCIETE ANONYME POUR L'ETUDE ET L'EXPLOITATION DES PROCEDES GEORGES CLAUDE, F-75321 Paris Cédex 07 (FR)
(72) Inventeur: Jouvaud, Dominique, F-75015 Paris (FR); Genies, Bernard, F-91440 Bures sur Yvette (FR)
(74) Mandataire: Le Moenner, Gabriel

(56) Documents cités:
- WO-A-82/00047
- DE-A- 4 026 555
- US-A- 3 819 318
- US-A- 4 645 448
- US-A- 4 699 588
- DATABASE WPIL Section Ch, Week 8422, Derwent Publications Ltd., London, GB; Class M24, AN 84-139031 & SU-A-1 039 966 (METALLURG HEAT TECH URALENERGOCHERMET)
- DATABASE WPIL Section Ch, Week 9020, Derwent Publications Ltd., London, GB; Class L01, AN 90-153294 & SU-A-1 498 724 (CORRESP ENG CONS IN)

## Description

La présente invention concerne les techniques de combustion pulsée où on imprime une pulsation à une flamme d'un brûleur de four industriel alimenté en carburant et en comburant, en provoquant des variations cycliques d'au moins un des débits de carburant et de comburant alimentant le brûleur.

On connaît déjà des procédés de combustion pulsatoire, basés sur le principe d'augmentation de volume des gaz brûlés. Cette augmentation de volume agit sur des dispositifs de réglage des débits des gaz à brûler provoquant une diminution de la combustion, donc une diminution du volume des gaz brûlés. La pression amont des fluides rétablit alors les débits à leur plus haute valeur et la combustion augmente, assurant ainsi une combustion pulsatoire.

Un tel procédé est décrit dans le document EP-A-0.046.898.

Le document SU-A-857.642 décrit un dispositif de pulsation de l'air pour la combustion de carburants gazeux ou liquides fonctionnant sur le principe d'une roue à aubes montée sur axe.

On sait que la production d'oxyde d'azote, nuisible pour l'environnement, dépend des pressions partielles d'oxygène, d'azote ainsi que de la température du milieu, ce qui pose des problèmes dans le cas de comburants fortement enrichis en oxygène ou de l'oxygène pur utilisés de plus en plus dans les fours industriels pour les nombreux avantages qu'ils procurent. Les études effectuées par la Demanderesse ont montré que, par exemple, dans le cas d'oxygène pur, la teneur des fumées en oxydes d'azote s'élève de 180 ppm à 1600 ppm dans un four dit adiabatique de 25 KW, où l'énergie thermique est transmise aux parois du four et aux fumées produites en fonction d'une teneur en azote dans le gaz naturel variant de 2 à 16 %. De même, la teneur en oxydes d'azote dans les fumées s'élève de 150 ppm à 500 ppm dans un four, par exemple un four de fusion de verre, où l'énergie thermique est transmise à la fois à la charge, aux parois et aux fumées, en fonction de la teneur en azote dans le gaz naturel utilisé. La Demanderesse a d'autre part constaté que, toutes choses étant égales par ailleurs, la teneur en oxydes d'azote dans les fumées passe de 700 ppm à 1200 ppm lorsque la teneur en oxygène résiduaire dans les fumées passe de 1 % à 4 %.

La présente invention a pour objet de proposer un procédé de combustion pulsée permettant, avec un comburant enrichi en oxygène, plus particulièrement avec un comburant fortement enrichi en oxygène, par exemple de l'oxygène sensiblement pur, de réduire les émissions d'oxydes d'azote et de monoxyde de carbone.

Pour ce faire, l'invention propose un procédé pour réduire les oxydes d'azote et le monoxyde de carbone pendant une combustion pulsée avec un comburant enrichi en oxygène et un carburant, où on imprime une pulsation à une flamme formée dans un four industriel par un brûleur en provoquant des variations cycliques, de fréquence inférieure à 3 Hz, d'au moins un des débits de carburant et comburant alimentant le brûleur.

Selon d'autres caractéristiques de l'invention :
- le rapport entre la durée à débit maximal et la durée à débit minimal du débit pulsé est compris entre 0,5 et 2, de préférence de l'ordre de 1 ;
- le rapport volumique entre un débit minimal et un débit maximal du débit pulsé est inférieur à 0,7, typiquement à 0,5, de préférence de l'ordre de 0,25 ;
- le rapport volumique entre un débit minimal et un débit surajouté de pulsations est compris entre 0,1 et 2, de préférence de l'ordre de 0,25 ;
- les variations cycliques sont provoquées au moins dans le débit de carburant et, dans le cas où les variations cycliques sont provoquées dans le débit de carburant et dans le débit de comburant, ces variations cycliques sont effectuées à une fréquence commune aux deux débits en étant de préférence déphasées d'au moins : 2.
- le comburant contient au moins 80 % d'oxygène, et est constitué avantageusement d'oxygène industriel sensiblement pur, le carburant étant typiquement du gaz naturel.

La présente invention concerne également des installations de combustion pulsée pour la mise en oeuvre des procédés ci-dessus, comprenant un brûleur de four industriel relié à au moins un conduit d'amenée de carburant et au moins un conduit d'amenée de comburant enrichi en oxygène, dans lequel au moins un des conduits d'amenée est pourvu d'un moyen de pulsation pour provoquer une pulsation du débit de fluide délivré par le conduit à une fréquence inférieure à 3 Hz.

La présente invention concerne également l'utilisation d'une telle installation dans un four de fusion de verre.

Comme le montrent les résultats expérimentaux qui seront détaillés plus avant, ces caractéristiques permettent de réduire considérablement les émissions d'oxydes d'azote et de monoxyde de carbone même en cas d'utilisation d'oxygène pur comme comburant et de maintenir la teneur volumique en oxygène dans les fumées à une valeur très faible. On peut estimer que les pulsations engendrées permettent d'intervenir en premier lieu sur les temps de séjour des espèces présentes (trajets co-linéaires) et en second lieu sur les temps de rencontre de ces espèces. On agit donc directement sur le niveau de température par le fait que, localement, on se trouve dans des conditions fortement sur- ou sous-stoechiométriques. La combustion locale s'effectue donc en présence de produits de combustion des combustions locales précédentes et on assiste de ce fait à un étagement du mécanisme de combustion et donc directement à une diminution de la formation d'oxydes d'azote.

D'autres caractéristiques et avantages de l'invention ressortiront de la description suivante de modes de réalisation, faite en relation avec les dessins annexés, sur lesquels :
- la figure 1 représente un diagramme du rapport des teneurs en oxyde d'azote NOx/NOx(ref) avec et sans pulsation en fonction de la fréquence des pulsations imprimées uniquement sur le carburant, en l'occurrence du gaz naturel ;
- la figure 2 représente un diagramme de la teneur en pourcentage en monoxyde de carbone en fonction de la fréquence des pulsations imprimées uniquement sur le carburant, en l'occurrence du gaz naturel ;
- les figures 3 et 4 sont des diagrammes correspondant à ceux des figures 1 et 2, les pulsations étant ici imprimées uniquement sur le comburant, en l'occurrence de l'oxygène ;
- les figures 5 et 6 sont des diagrammes correspondant à ceux des figures 1 et 2, les pulsations étant ici imprimées à la fois sur le carburant gaz naturel et sur le comburant oxygène ;
- les figures 7 et 8 sont des diagrammes analogues à ceux des figures 1 et 2 avec d'autres dispositions opératoires ;
- les figures 9 et 10 représentent des diagrammes des rapports NOx/NOx(ref) en fonction du rapport C/D, C étant le débit minimal constant et D le débit surajouté de pulsations ;
- la figure 11 est une vue schématique d'une installation selon l'invention ;
- la figure 12 est une vue schématique d'une variante de réalisation de l'installation ;
- les figures 13 et 14 sont des vues schématiques partielles d'un autre mode de réalisation de moyens de pulsation selon l'invention ;
- la figure 15 est une vue schématique en coupe d'un autre mode de réalisation d'un moyen de pulsation selon l'invention ; et
- les figures 16 à 18 sont des vues en coupe de variantes de réalisation du boisseau rotatif de la vanne de la figure 15.

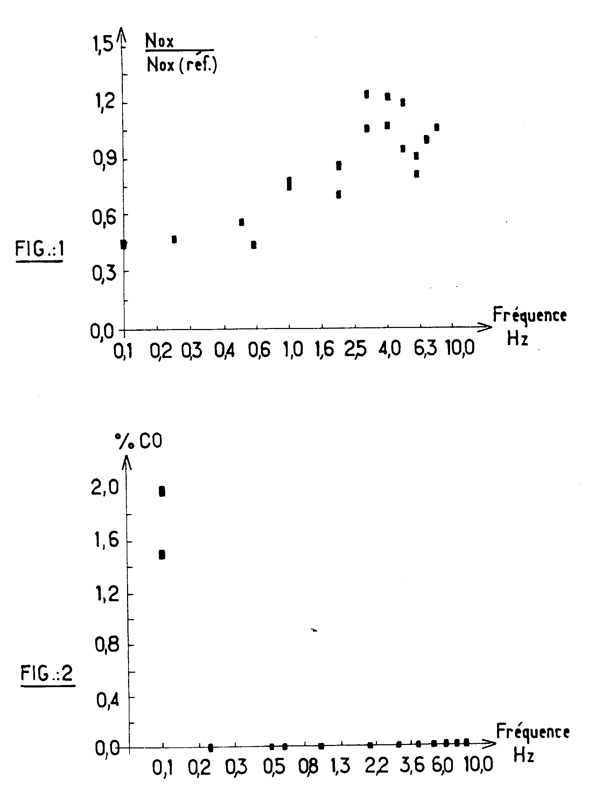

En référence à la figure 1, l'expérimentation correspond à des pulsations imprimées uniquement sur le carburant gaz naturel, le rapport volumique du débit minimal au débit maximal de gaz naturel étant de 0,23. On constate un rapport du taux d'émission d'oxydes d'azote rapporté à un système de référence sans pulsation (NOx(ref)) qui varie de 0,5 à 1,2 pour une variation de fréquence de pulsation de 0,1 à 10,8 Hz. Au-dessous de 3 Hz, on note une réduction sensible des émissions d'oxydes d'azote, qui atteint 50 % dans la gamme de fréquences de pulsations entre 0,1 et 0,3 Hz.

Dans les mêmes conditions, on constate, sur la figure 2, une émission quasi-nulle de monoxydes de carbone, sauf pour les très basses fréquences, inférieures à 0,15 Hz.

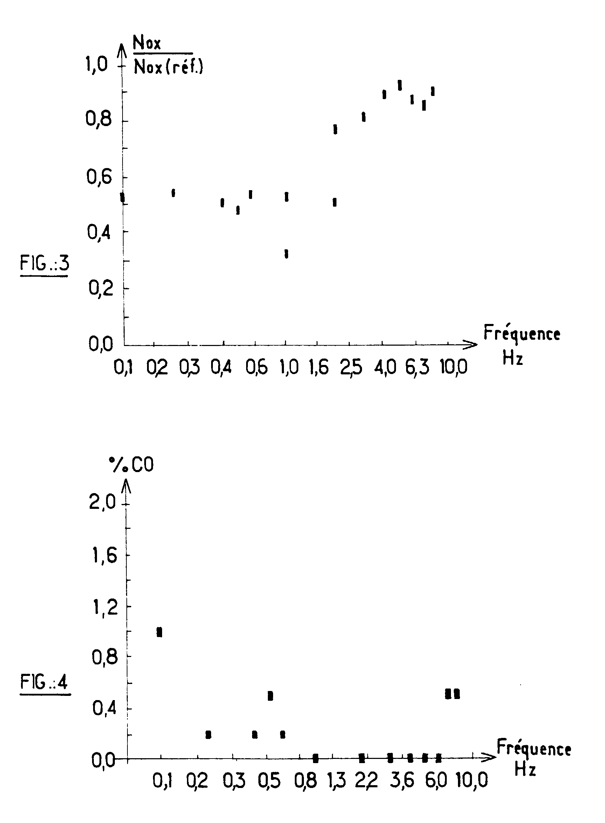

En se référant aux figures 3 et 4, on constate des effets similaires de réduction du taux d'émission d'oxydes d'azote et de légère production de monoxyde de carbone à très basse fréquence dans le cas où l'on imprime des pulsations seulement sur le comburant oxygène, la plage optimale étant ici entre 0,2 et 2 Hz.

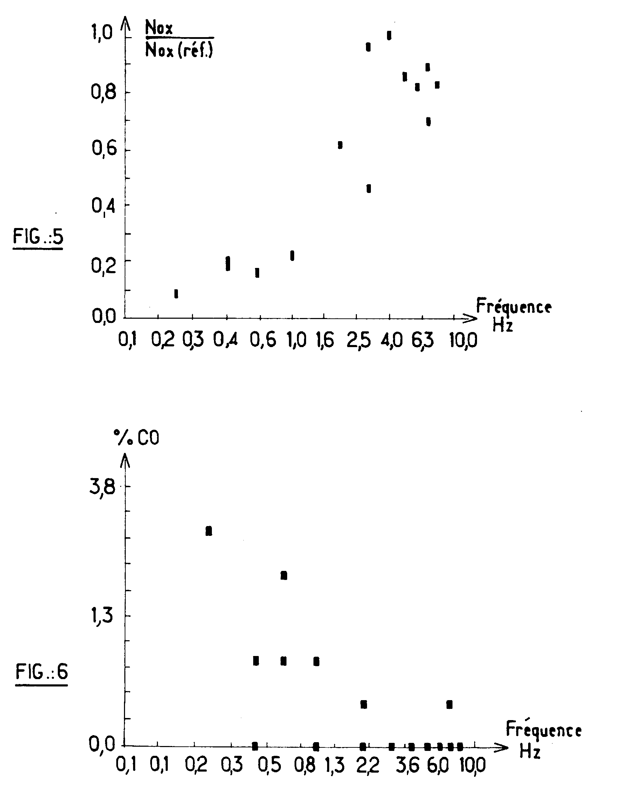

En se référant aux figures 5 et 6, qui correspondent à une expérimentation où l'on imprime des pulsations à la fois sur le carburant gaz naturel et sur le comburant oxygène, on note une réduction importante des émissions de NOx pour des fréquences de pulsation inférieures à 3 Hz, cette réduction atteignant plus de 90 % pour des fréquences comprises entre 0,2 et 0,4 Hz avec un déphasage d'au moins π : 2 entre les pulsations du carburant et du comburant.

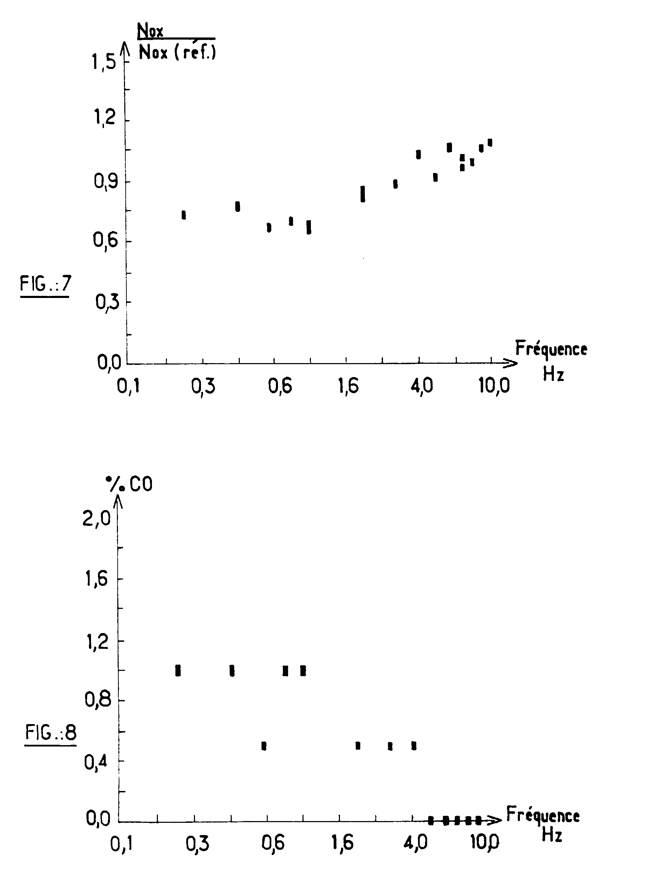

En se référant aux figures 7 et 8, on constate des taux réduits d'oxydes d'azote émis dans un four de fusion de verre aux fréquences inférieures à 4 Hz avec un rapport des débits minimal et maximal de 0,5 et une durée à débit minimal égale à la durée à débit maximal. On opère sur un four avec un débit minimal égal à la moitié du débit maximal, et un déphasage de entre les pulsations dans les débits, et une durée à débit minimal sensiblement égale à celle à débit maximal : on constate alors une réduction de 40% environ du taux d'émission des oxydes d'azote.

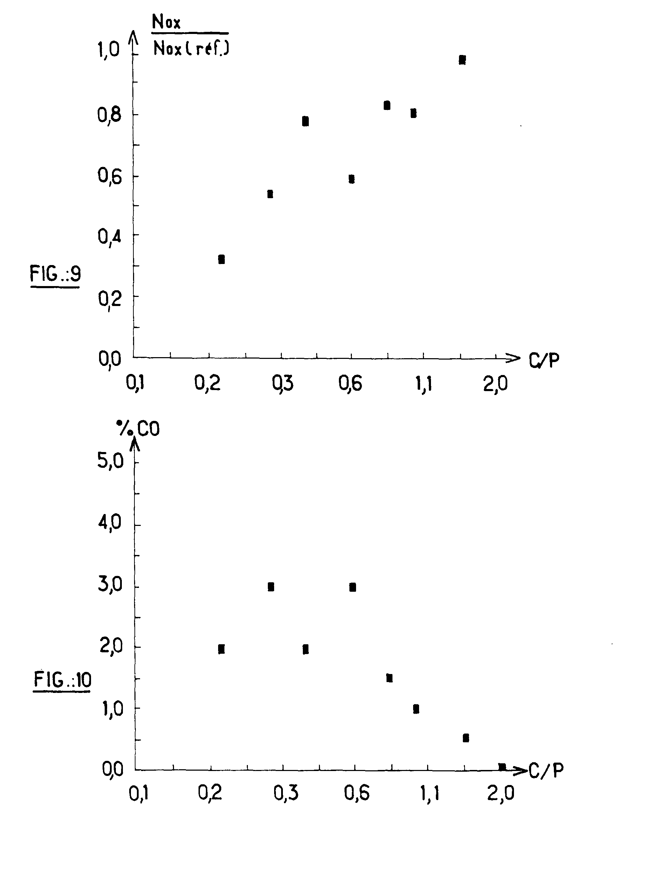

En se référant maintenant aux diagrammes des figures 9 et 10, qui représentent en ordonnées, respectivement les taux d'oxydes d'azote et de monoxyde de carbone et, en abscisses, le rapport entre le débit minimal et le débit maximal des pulsations (exprimé par C/P correspondant au rapport entre un débit minimal constant et un supplément de débit de pulsation), on voit que, pour une émission notablement réduite d'oxydes d'azote, le rapport C/P doit être compris entre 0,1 et 0,3, c'est-à-dire que le rapport débit minimal/débit maximal doit être compris entre 0,5 et 0,2, en étant de préférence de l'ordre de 1.

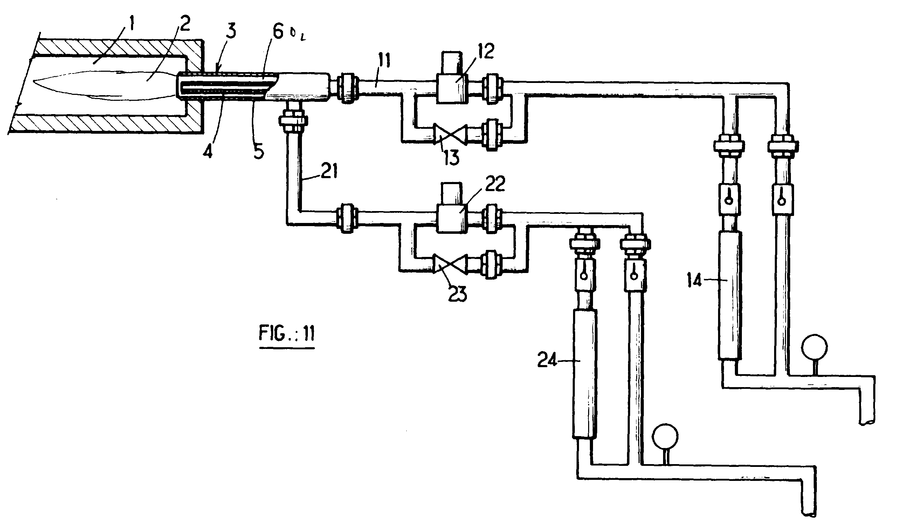

On reconnaît sur la figure 11 une partie 1, formant chambre de combustion, d'un four industriel, par exemple d'un four de fusion de verre, dans laquelle une flamme 2 est formée par un brûleur oxycombustible 3 constitué d'un tube central 4 d'amenée de gaz naturel entouré d'un tube concentrique 5 d'amenée d'oxygène. Les tubes 4 et 5 sont reliés à des sources gazeuses non représentées respectivement au moyen d'un conduit 11, 21, incorporant chacun une électrovanne de commande basse fréquence 12, 22 by-passée par une dérivation comportant une vanne pointeau 13, 23 délivrant un débit minimal déterminé. Les débits de gaz sont mesurés, en amont des vannes 12, 13 ; 22, 23 par des rotamètres en dérivation 14, 24. Les électrovannes 12 et 22 permettent, par leurs ouvertures et fermetures cycliques, une pulsation des débits de gaz naturel et d'oxygène entre un débit minimal fourni par les vannes pointeaux 13 et 23 (les vannes 12 et 22 étant fermées) et un débit maximal correspondant à la pleine ouverture des électrovannes 12 et 22. Les mêmes moyens de pulsation peuvent être appliqués dans les cas simplifiés où l'on n'effectue une pulsation que sur l'un des gaz acheminés au brûleur 3, typiquement sur le comburant.

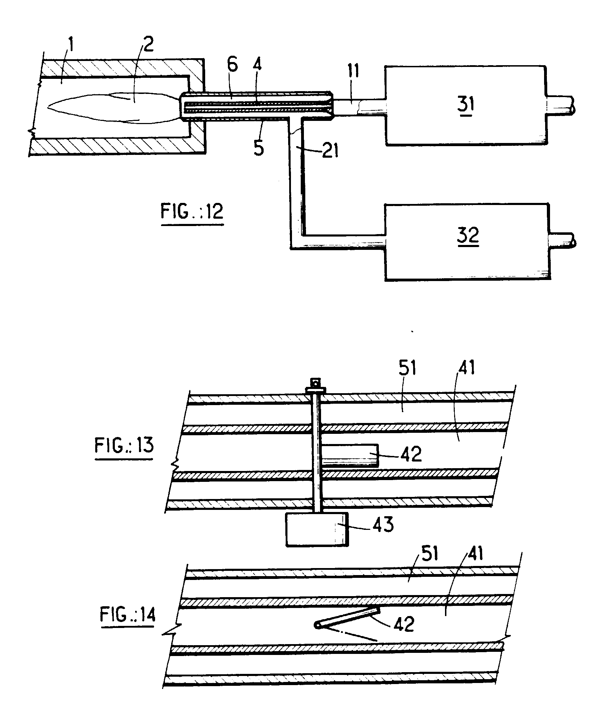

En variante, comme représenté sur la figure 12, les moyens de pulsation peuvent être constitués par des générateurs électroniques de débit 31, 32.

On a représenté sur les figures 13 et 14 une variante des moyens de pulsation dans au moins un des conduits alimentant le brûleur par l'oscillation alternative d'un aileron 42 monté tourillonnant dans un conduit 41 d'alimentation du brûleur en carburant et actionné cycliquement par un moteur électrique 43, la conduite 51 d'amenée de l'autre composant de combustion étant dépourvue de moyens de pulsation.

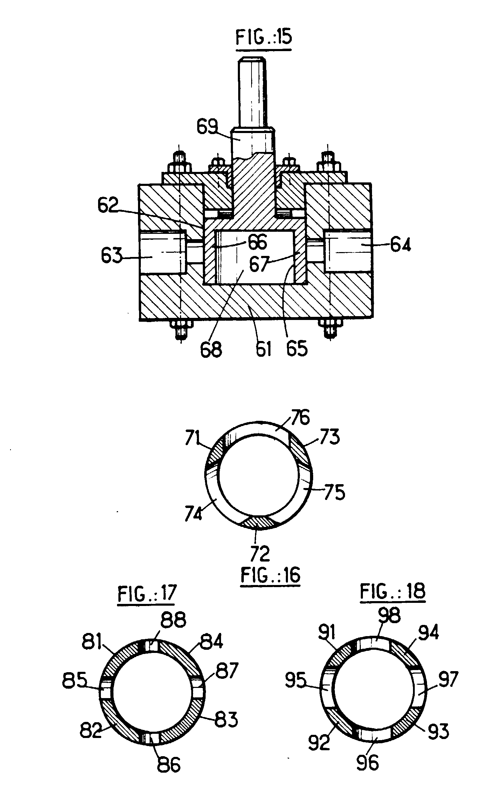

Dans la variante représentée sur les figures 15 à 18, le moyen de pulsation comprend une vanne rotative comportant un corps de vanne 61 définissant une cavité interne cylindrique 62 dans laquelle débouchent des passages d'entrée et de sortie alignés 63 et 64. Dans la cavité 62 est monté en rotation un boisseau rotatif 65 comportant une paroi tubulaire formée avec des lumières angulairement réparties 68 ménageant entre elles des portions de paroi obturatrice 66, 67 obturant séquentiellement, lors de la rotation du boisseau 65, les passages 63, 64. Le boisseau 65 est monté en bout d'un axe 69 tourillonnant dans le corps de vanne 61 et entraîné en rotation continue ou éventuellement alternative par un moteur (non représenté). Dans le cas d'une pulsation sur les deux fluides d'alimentation du brûleur, un moteur commun peut entraîner les deux vannes rotatives assurant la pulsation des débits de comburant et de carburant, le déphasage des ouvertures/fermetures des vannes, et donc des pulsations des débits, s'effectuant par simple calage de pignons d'entraînement entre les deux vannes.

Dans le mode de réalisation de la figure 15, le boisseau 65 comporte deux lumières diamétralement opposées 68. On peut toutefois modifier, selon les lois requises, le rapport des durées d'ouverture/fermeture en réalisant des boisseaux ayant une répartition différente des lumières, comme représenté sur la figure 16 (trois lumières 74-76 d'ouverture angulaire importante séparant trois zones obturatrices 71-73 de faible extension angulaire), la figure 17 (quatre petites lumières 85-88 entre quatre parois obturatrices de large extension angulaire 81-84) ou la figure 18 (quatre lumières 95-98 et quatre portions obturatrices 91-94 ayant sensiblement la même extension angulaire).

## Revendications

1. Procédé pour réduire les oxydes d'azote et le monoxyde de carbone pendant une combustion pulsée avec un comburant enrichi en oxygène et un carburant, où on imprime une pulsation à une flamme (2) formée dans un four industriel par un brûleur (3) en provoquant des variations cycliques, de fréquence inférieure à 3 Hz, d'au moins un des débits de carburant et comburant alimentant le brûleur.

2. Procédé selon la revendication 1, caractérisé en ce que la fréquence est comprise entre 0,1 et 1 Hz.

3. Procédé selon la revendication 2, caractérisé en ce que la fréquence est d'environ 0,2 Hz.

4. Procédé selon l'une des revendications 1 à 3, caractérisé en ce que le rapport entre la durée à débit maximal et la durée à débit minimal du débit variant cycliquement est compris entre 0,5 et 2.

5. Procédé selon la revendication 4, caractérisé en ce que le rapport entre la durée à débit maximal et la durée à débit minimal est de l'ordre de 1.

6. Procédé selon l'une des revendications précédentes, caractérisé en ce que le rapport volumique entre un débit minimal et un débit maximal du débit variant cycliquement est inférieur à 0,7.

7. Procédé selon la revendication 6, caractérisé en ce que le rapport volumique est inférieur à 0,5.

8. Procédé selon la revendication 7, caractérisé en ce que le rapport volumique est d'environ 0,25.

9. Procédé selon l'une des revendications précédentes, caractérisé en ce que le rapport volumique entre un débit minimal et un débit surajouté de pulsations du débit variant cycliquement est compris entre 0,3 et 2, de préférence de l'ordre de 0,3.

10. Procédé selon l'une des revendications précédentes, caractérisé en ce que les variations cycliques sont provoquées dans le débit de carburant.

11. Procédé selon l'une des revendications 1 à 9, caractérisé en ce que les variations cycliques sont provoquées dans le débit du carburant et dans le débit de comburant.

12. Procédé selon la revendication 11, caractérisé en ce que les variations cycliques sont effectuées à une fréquence commune dans les deux débits de carburant et de comburant.

13. Procédé selon la revendication 11 ou la revendication 12, caractérisé en ce que les variations cycliques des débits de carburant et de comburant sont déphasées d'au moins π/2.

14. Procédé selon la revendication 13, caractérisé en ce que les variations cycliques des débits de carburant et de comburant sont déphasées d'environ π.

15. Procédé selon l'une des revendications précédentes, caractérisé en ce que le comburant contient au moins 80 % d'oxygène.

16. Procédé selon la revendication 15, caractérisé en ce que le comburant est de l'oxygène sensiblement pur.

17. Procédé selon l'une des revendications précédentes, caractérisé en ce que le carburant est du gaz naturel.

18. Installation de combustion pulsée pour la mise en oeuvre d'un procédé selon l'une des revendications 1 à 16, comprenant un brûleur (3) pour former une flamme dans un four industriel (1), le brûleur étant relié à au moins une conduite d'amenée de carburant (11, 41) et au moins une conduite (11, 51) d'amenée de comburant enrichi en oxygène, caractérisée en ce qu'au moins une des conduites d'amenée est pourvue d'un moyen de pulsation (12, 31, 42 ; 22, 32) pour provoquer une pulsation à une fréquence inférieure à 3 Hz du débit de fluide délivré par la conduite au brûleur (3).

19. Installation selon la revendication 18, caractérisée en ce que le moyen de pulsation comprend une électrovanne (12 ; 22) by-passée par une restriction (13 ; 23) à débit minimal déterminé.

20. Installation selon la revendication 18, caractérisée en ce que le moyen de pulsation comprend un aileron pivotant (42) disposé dans le conduit (41) et des moyens (43) pour conférer un mouvement d'oscillation alternative à l'aileron.

21. Installation selon la revendication 18, caractérisée en ce que le moyen de pulsation comprend une vanne avec un boisseau rotatif (65) comportant une paroi tubulaire formé avec des lumières (68 ; 74-76 ; 85-88 ; 95-98) angulairement réparties et définissant une séquence d'ouvertures et de fermetures de passage de fluide dans la vanne lors de la rotation du boisseau.

22. Installation selon l'une des revendications 18 à 21, caractérisée en ce que le brûleur (3) comprend deux canaux concentriques (4, 5) d'éjection du carburant et du comburant.

23. Utilisation d'une installation selon l'une des revendications 18 à 22 dans un four de fusion de verre.

## Patentansprüche

1. Verfahren zur Verringerung der Stickoxide und von Kohlenmonoxid während einer pulsierenden Verbrennung mit einem sauerstoffangereicherten, die Verbrennung fördernden Stoff und einem Brennstoff, bei dem man eine in einem Industrieofen durch einen Brenner (3) gebildete Flamme (2) pulsierend versorgt, indem man Strömungsmengen mit denen der Brenner versorgt wird, und zwar entweder die des Brennstoffs oder die des die Verbrennung fördernden Stoffs, mit einer Frequenz unterhalb 3 Hz zyklisch variiert.

2. Verfahren nach Anspruch 1, dadurch gekennzeichnet, daß die Frequenz zwischen 0,1 und 1 Hz liegt.

3. Verfahren nach Anspruch 2, dadurch gekennzeichnet, daß die Frequenz ungefähr 0,2 Hz beträgt.

4. Verfahren nach einem der Ansprüche 1 bis 3, dadurch gekennzeichnet, daß das Verhältnis der Durchflußdauer der Höchstströmungsmenge zur Durchflußdauer der Mindestströmungsmenge der zyklisch variierenden Strömungsmenge zwischen 0,5 und 2 liegt.

5. Verfahren nach Anspruch 4, dadurch gekennzeichnet, daß das Verhältnis der Durchflußdauer der Höchstströmungsmenge zur Durchflußdauer der Mindestströmungsmenge in der Größenordnung von 1 liegt.

6. Verfahren nach einem der vorangehenden Ansprüche, dadurch gekennzeichnet, daß das Volumenverhältnis der Höchstströmungsmenge zur Mindestströmungsmenge der zyklisch variierenden Strömungsmenge unterhalb 0,7 liegt.

7. Verfahren nach Anspruch 6, dadurch gekennzeichnet, daß das Volumenverhältnis unterhalb 0,5 liegt.

8. Verfahren nach Anspruch 7, dadurch gekennzeichnet, daß das Volumenverhältnis etwa 0,25 beträgt.

9. Verfahren nach einem der vorangehenden Ansprüche, dadurch gekennzeichnet, daß das Volumenverhältnis der Mindestströmungsmenge und einer zusätzlich pulsierend zugeführten Strömungsmenge der zyklisch variierenden Strömungsmenge zwischen 0,3 und 2 und vorzugsweise in der Größenordnung von 0,3 liegt.

10. Verfahren nach einem der vorangehenden Ansprüche, dadurch gekennzeichnet, daß die zyklischen Variationen in der Strömungsmenge des Brennstoffs hervorgerufen werden.

11. Verfahren nach einem der Ansprüche 1 bis 9, dadurch gekennzeichnet, daß die zyklischen Variationen in der Strömungsmenge des die Verbrennung fördernden Stoffs hervorgerufen werden.

12. Verfahren nach Anspruch 11, dadurch gekennzeichnet, daß die zyklischen Variationen mit einer Frequenz erfolgen, die beiden Strömungsmengen, und zwar der des Brennstoffs und der des die Verbrennung fördernden Stoffs, gemein ist.

13. Verfahren nach Anspruch 11 oder Anspruch 12, dadurch gekennzeichnet, daß die zyklischen Variationen in den Strömungsmengen des Brennstoffs und des die Verbrennung fördernden Stoffs einen Phasenunterschied von mindestens π/2 aufweisen.

14. Verfahren nach Anspruch 13, dadurch gekennzeichnet, daß die zyklischen Variationen in den Strömungsmengen des Brennstoffs und des die Verbrennung fördernden Stoffs einen Phasenunterschied von etwa π aufweisen.

15. Verfahren nach einem der vorangehenden Ansprüche, dadurch gekennzeichnet, daß der die Verbrennung fördernde Stoff mindestens 80% Sauerstoff enthält.

16. Verfahren nach Anspruch 15, dadurch gekennzeichnet, daß es sich bei dem die Verbrennung fördernden Stoff um im wesentlichen reinen Sauerstoff handelt.

17. Verfahren nach einem der vorangehenden Ansprüche, dadurch gekennzeichnet, daß es sich bei dem Brennstoff um Erdgas handelt.

18. Vorrichtung zur pulsierenden Verbrennung zur Durchführung eines Verfahrens nach einem der Ansprüche 1 bis 16, bestehend aus einem Brenner (3) zur Bildung einer Flamme in einem Industrieofen (1), wobei der Brenner mit mindestens einer Zufuhrleitung für den Brennstoff (11, 41) und mindestens einer Zufuhrleitung (11, 51) für den sauerstoffangereicherten, die Verbrennung fördernden Stoff verbunden ist, dadurch gekennzeichnet, daß mindestens eine der Zufuhrleitungen mit einem Pulsationsmittel, (12, 31, 42, 22, 32) versehen ist, mit dem eine Pulsation der über die Leitung dem Brenner (3) zugeführten Fluid-Strömungsmenge mit einer unterhalb 3 Hz liegenden Frequenz erzeugt werden kann.

19. Vorrichtung nach Anspruch 18, dadurch gekennzeichnet, daß das Pulsationsmittel aus einem Magnetventil (12; 22) mit einer Drosselleitung (13; 23) mit einer bestimmten Mindestströmungsmenge als Bypass besteht.

20. Vorrichtung nach Anspruch 18, dadurch gekennzeichnet, daß das Pulsationsmittel eine drehbare, in der Leitung (41) angeordnete Klappe (42) sowie Mittel (43) aufweist, um die Klappe in alternierende Schwingung zu versetzen.

21. Vorrichtung nach Anspruch 18, dadurch gekennzeichnet, daß das Pulsationsmittel aus einem Ventil mit drehbarem Hahnküken (65) besteht, das eine rohrförmige Wand aufweist, die mit zwei winkelmäßig versetzten Schlitzen (68; 74-76; 85-88; 95-98) versehen ist, die bei Drehung des Hahnkükens im Ventil eine Folge von Fluiddurchlaß- und -sperrstellungen definieren.

22. Vorrichtung nach einem der Ansprüche 18 bis 21, dadurch gekennzeichnet, daß der Brenner (3) zwei konzentrische Kanäle (4,5) zum Ausstoßen des Brennstoffs und des die Verbrennung fördernden Stoffs aufweist.

23. Verwendung einer Vorrichtung nach einem der Ansprüche 18 bis 22 in einem Glasschmelzofen.

## Claims

1. Method for reducing nitrogen oxides and carbon monoxide during pulsed combustion with an oxygen-enriched oxidant and a fuel, where a pulse is given to a flame (2) formed in an industrial furnace by a burner (3) by causing cyclical variations, of frequency less than 3 Hz, in at least one of the flows of fuel and oxidant feeding the burner.

2. Method according to Claim 1, characterised in that the frequency lies between 0.1 and 1 Hz.

3. Method according to Claim 2, characterised in that the frequency is approximately 0.2 Hz.

4. Method according to one of Claims 1 to 3, characterised in that the ratio between the period at maximum flow and the period at minimum flow of the cyclically varying flow lies between 0.5 and 2.

5. Method according to Claim 4, characterised in that the ratio between the period at maximum flow and the period at minimum flow is around 1.

6. Method according to one of the preceding claims, characterised in that the ratio by volume between a minimum flow and a maximum flow of the cyclically varying flow is less than 0.7.

7. Method according to Claim 6, characterised in that the ratio by volume is less than 0.5.

8. Method according to Claim 7, characterised in that the ratio by volume is approximately 0.25.

9. Method according to one of the preceding claims, characterised in that the ratio by volume between a minimum flow and a flow with the addition of pulsations in the cyclically varying flow lies between 0.3 and 2 and preferably around 0.3.

10. Method according to one of the preceding claims, characterised in that the cyclical variations are caused in the flow of fuel.

11. Method according to one of Claims 1 to 9, characterised in that the cyclical variations are caused in the flow of fuel and in the flow of oxidant.

12. Method according to Claim 11, characterised in that the cyclical variations are effected at a common frequency in the two flows of fuel and oxidant.

13. Method according to Claim 11 or Claim 12, characterised in that the cyclical variations in the flows of fuel and oxidant are out of phase by at least π/2.

14. Method according to Claim 13, characterised in that the cyclical variations of the flows of fuel and oxidant are out of phase by approximately π.

15. Method according to one of the preceding claims, characterised in that the oxidant contains at least 80% oxygen.

16. Method according to Claim 15, characterised in that the oxidant is essentially pure oxygen.

17. Method according to one of the preceding claims, characterised in that the fuel is natural gas.

18. Pulsed combustion installation for implementing a method according to one of Claims 1 to 16, comprising a burner (16) for forming a flame in an industrial furnace (1), the burner being connected to at least one fuel supply pipe (11, 41) and at least one oxygen-enriched oxidant supply pipe (11, 51), characterised in that at least one of the supply pipes is provided with at least one pulsation means (12, 31, 42; 22, 32) for causing a pulsation at a frequency below 3 Hz of the fluid flow delivered by the pipe to the burner (3).

19. Installation according to Claim 18, characterised in that the pulsation means comprises a solenoid valve (12; 22) by-passed by a restriction (13; 23) with a given minimum flow rate.

20. Installation according to Claim 18, characterised in that the pulsation means comprises a pivoting flap (42) disposed in the pipe (41) and means (43) for conferring an alternating oscillation movement on the flap.

21. Installation according to Claim 18, characterised in that the pulsation means comprises a valve with a rotary gate (65) having a tubular wall formed with apertures (68; 74-76; 85-88; 95-98) angularly distributed and defining a sequence of openings and closures of the fluid passage in the valve when the gate rotates.

22. Installation according to one of Claims 18 to 21, characterised in that the burner (3) comprises two concentric channels (4, 5) for ejecting the fuel and oxidant.

23. Use of an installation according to one of Claims 18 to 22 in a glass fusion furnace.
